# EUROPÄISCHE PATENTANMELDUNG

(11) **EP 4 367 994 A1**
(43) Veröffentlichungstag der Anmeldung: **15.05.2024**
(21) Anmeldenummer: 23197922.0
(22) Anmeldetag: 18.09.2023
(51) Int. Cl.: A01B 69/00, A01B 76/00, A01B 69/04, A01B 79/00

(54) **3D-KAMERAVORRICHTUNG ZUR DATENSATZERZEUGUNG FÜR EINE ARBEITSMASCHINE**

(30) Priorität: 09.11.2022 DE 102022129571
(71) Anmelder: CLAAS Tractor S.A.S., 78141 Vélizy-Villacoublay Cedex (FR)
(72) Erfinder: Birkmann, Christian, 33775 Versmold (DE); Schaub, Christian, 33098 Paderborn (DE)
(74) Vertreter: CLAAS Gruppe

(57) **Zusammenfassung**

Die vorliegende Erfindung betrifft eine 3D-Kameravorrichtung (1) zur Erzeugung eines Datensatzes für eine Steuer- und/oder Regeleinrichtung (2) einer selbstfahrenden landwirtschaftlichen Arbeitsmaschine (3), die ein landwirtschaftliches Anbaugerät (4) aufweist.

Die vorliegende Erfindung beruht auf dem allgemeinen Gedanken, dass die 3D-Kameravorrichtung (1) dazu vorgesehen und eingerichtet ist, ein dreidimensionales Modell des landwirtschaftlichen Anbaugerätes (4) zu generieren und in diesem dreidimensionalen Modell des landwirtschaftlichen Anbaugerätes (4) für den Datensatz der Steuer- und/oder Regeleinrichtung (2) der landwirtschaftlichen Arbeitsmaschine (3) Anbaugerätpunkte (5) des Anbaugerätes (4) festzulegen.

## Beschreibung

Die vorliegende Erfindung betrifft eine 3D-Kameravorrichtung zur Erzeugung eines Datensatzes für eine Steuer- und/oder Regeleinrichtung einer selbstfahrenden landwirtschaftlichen Arbeitsmaschine, die ein landwirtschaftliches Anbaugerät aufweist. Ferner betrifft die Erfindung eine selbstfahrende landwirtschaftliche Arbeitsmaschine und ein datenbankbasiertes Verwaltungssystem.

Die DE 10 2019 211 710 A1 betrifft eine mobile Arbeitsmaschine umfassend einen Rahmen und ein Bodeneingriffselement, das beweglich von dem Rahmen getragen wird und von einem Motor angetrieben wird, um die Bewegung der mobilen Arbeitsmaschine anzutreiben.

Die WO 2018/086764 A1 betrifft ein Verfahren zum prädiktiven Erzeugen von Daten zur Steuerung eines Fahrweges und eines Betriebsablaufes für ein landwirtschaftliches Fahrzeug und eine landwirtschaftliche Maschine.

Die DE 10 2021 101 553 A1 betrifft ein Verfahren zur Kontrolle und/oder Dokumentation eines Arbeitsvorgangs einer mit einem Gerät zusammenwirkenden, selbstfahrenden landwirtschaftlichen Arbeitsmaschine.

Die DE 10 2018 203 238 A1 betrifft Verfahren und Systeme zur Kalibrierung und zum Betrieb einer Landmaschine mit einem Anbaugerät an einem Hubwerk, welches zumindest folgende Schritte umfasst: a) Empfangen von Kameradaten von einer Kamera bzw. Kamerasystem zur Bereitstellung von dreidimensionalen Bilddaten, welche eine Blickrichtung auf das Anbaugerät und den das Anbaugerät umgebenden Boden aufweist, wobei die Kameradaten eine Mehrzahl von zeitlich nacheinander aufgenommenen Kamerabildern umfassen, b) Auswertung der Kameradaten, wobei Pixel in den Kameradaten entweder dem Anbaugerät oder dem das Anbaugerät umgebenden Boden zugeordnet werden, c) Verwenden der zugeordneten Pixel, um zumindest mindestens einen Arbeitsparameter des Anbaugerätes oder der Landmaschine zu bestimmen, d) Ausgabe des Arbeitsparameters zur Ansteuerung mindestens einer Komponente der Landmaschine.

Der vorliegenden Erfindung liegt die Aufgabe zugrunde, eine verbesserte oder zumindest eine alternative Ausführungsform einer 3D-Kameravorrichtung zur Erzeugung eines Datensatzes für eine Steuer- und/oder Regeleinrichtung einer selbstfahrenden landwirtschaftlichen Arbeitsmaschine, die ein landwirtschaftliches Anbaugerät umfasst, anzugeben, wobei insbesondere ein einfacheres Erfassen des landwirtschaftlichen Anbaugerätes ermöglicht wird und/oder wobei insbesondere optimierte Auswertung der 3D-Kameradaten ermöglicht wird. Insbesondere kann eine 3D-Kameravorrichtung eine 3D-Kamera und/oder eine Software, insbesondere ein computerimplementiertes Verfahren, zur 3D-Modellgenerierung und/oder eine Software, insbesondere ein computerimplementiertes Verfahren, zur Auswertung des 3D-Modells aufweisen.

Diese Aufgabe wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, dass die 3D-Kameravorrichtung dazu vorgesehen und eingerichtet ist, ein dreidimensionales Modell des landwirtschaftlichen Anbaugerätes zu generieren und in diesem dreidimensionalen Modell des landwirtschaftlichen Anbaugerätes für den Datensatz der Steuer- und/oder Regeleinrichtung der landwirtschaftlichen Arbeitsmaschine Anbaugerätpunkte des Anbaugerätes festzulegen.

Die 3D-Kameravorrichtung kann dazu vorgesehen und eingerichtet sein, dreidimensionale Bilder zu erfassen und aus diesen erfassten dreidimensionalen Bildern das dreidimensionale Modell des landwirtschaftlichen Anbaugerätes zu generieren. Hierbei kann die 3D-Kameravorrichtung dazu vorgesehen und eingerichtet sein, in den dreidimensionalen Bildern zwischen Anbaugeräte bezogenen Pixeln und nicht Anbaugeräte bezogenen Pixeln, wie z.B. den das Anbaugerät umgebenden Boden, zu unterscheiden.

Das landwirtschaftliche Anbaugerät kann für eine Bodenbearbeitung, ein Ausbringen von Material, wie Saatgut oder Dünger, auf einem Feld, für Erntearbeiten und/oder für Transportarbeiten ausgebildet sein.

Die Anbaugerätpunkte des Anbaugerätes können anbaugerätespezifische Informationen bezüglich Teilkomponenten des Anbaugerätes sein.

Diese Teilkomponenten des Anbaugerätes können als Kugeln zur Aufnahme von Unterlenkern, insbesondere zur Aufnahme von Traktor-Unterlenkern, und/oder Kugeln zur Aufnahme von Oberlenkern, insbesondere zur Aufnahme von Traktor-Oberlenkern, und/oder Kopplungspunkte zur selbstfahrenden landwirtschaftlichen Arbeitsmaschine, insbesondere zum Traktor, ausgebildet sein. Die Kopplungspunkte können als Kugelkupplung, ein Piton Fix, ein Zugmaul usw. ausgebildet sein. Die Teilkomponenten des Anbaugerätes können alternativ oder zusätzlich eine oder mehrere Werkzeugspitzen, und/oder Rollen, und/oder Stützräder, und/oder Transportreifen, und/oder einen Tank ausbilden. Die Teilkomponenten des Anbaugerätes können alternativ oder zusätzlich Frontlader-Koppelpunkte zur selbstfahrenden landwirtschaftlichen Arbeitsmaschine, insbesondere zum Traktor, ausbilden. Die Teilkomponenten des Anbaugerätes können eine Frontlader-Geometrie aufweisen.

Die 3D-Kameravorrichtung kann dazu vorgesehen und eingerichtet sein, in dem dreidimensionalen Modell des landwirtschaftlichen Anbaugerätes die Teilkomponenten des Anbaugerätes mit wenigstens einem Anbaugerätpunkt, insbesondere mit genau einem Anbaugerätpunkt, für den Datensatz der Steuer- und/oder Regeleinrichtung der landwirtschaftlichen Arbeitsmaschine festzulegen. Ein Anbaugerätpunkt kann eine dreidimensionale Koordinate im dreidimensionalen Raum, insbesondere eine dreidimensionale Koordinate bezüglich des dreidimensionalen Modells des landwirtschaftlichen Anbaugerätes, sein.

Die 3D-Kameravorrichtung kann dazu vorgesehen und eingerichtet sein, in dem dreidimensionalen Modell des landwirtschaftlichen Anbaugerätes einen Koordinatenursprung festzulegen. Die dreidimensionalen Koordinaten im dreidimensionalen Raum können sich auf diesen Koordinatenursprung beziehen.

Mit der erfindungsgemäßen 3D-Kameravorrichtung wird der Aufwand in der Akquise von Geometriedaten und/oder Kinematik-Punkten des landwirtschaftlichen Anbaugerätes reduziert. Außerdem kann eine automatische Geräteerkennung einer selbstfahrenden landwirtschaftlichen Arbeitsmaschine, insbesondere eines Traktors, mittels dem Datensatz optimiert werden.

Bei einer vorteilhaften Weiterbildung der erfindungsgemäßen Lösung ist vorgesehen, dass sich wenigstens ein Anbaugerätpunkt auf einen Kopplungspunkt des landwirtschaftlichen Anbaugerätes zur Kopplung an die selbstfahrende landwirtschaftliche Arbeitsmaschine bezieht.

Bei einer vorteilhaften Weiterbildung der erfindungsgemäßen Lösung ist vorgesehen, dass sich wenigstens ein Anbaugerätpunkt auf einen unterlenkerseitigen Kopplungspunkt des landwirtschaftlichen Anbaugerätes zur Kopplung an die selbstfahrende landwirtschaftliche Arbeitsmaschine bezieht.

Bei einer vorteilhaften Weiterbildung der erfindungsgemäßen Lösung ist vorgesehen, dass sich wenigstens ein Anbaugerätpunkt auf einen oberlenkerseitigen Kopplungspunkt des landwirtschaftlichen Anbaugerätes zur Kopplung an die selbstfahrende landwirtschaftliche Arbeitsmaschine bezieht.

Bei einer vorteilhaften Weiterbildung der erfindungsgemäßen Lösung ist vorgesehen, dass sich wenigstens ein Anbaugerätpunkt auf einen Werkzeugspitzenpunkt des landwirtschaftlichen Anbaugerätes bezieht.

Bei einer vorteilhaften Weiterbildung der erfindungsgemäßen Lösung ist vorgesehen, dass sich wenigstens ein Anbaugerätpunkt auf einen Stützradpunkt des landwirtschaftlichen Anbaugerätes bezieht.

Bei einer vorteilhaften Weiterbildung der erfindungsgemäßen Lösung ist vorgesehen, dass das landwirtschaftliche Anbaugerät ein bezüglich der selbstfahrenden landwirtschaftlichen Arbeitsmaschine frontseitiges Anbaugerät ausbildet, oder dass das landwirtschaftliche Anbaugerät ein bezüglich der selbstfahrenden landwirtschaftlichen Arbeitsmaschine hinterseitiges Anbaugerät ausbildet.

Bei einer vorteilhaften Weiterbildung der erfindungsgemäßen Lösung ist vorgesehen, dass die 3D-Kameravorrichtung außerhalb der selbstfahrenden landwirtschaftlichen Arbeitsmaschine einsetzbar ist, und/oder dass die 3D-Kameravorrichtung von der selbstfahrenden landwirtschaftlichen Arbeitsmaschine beabstandet einsetzbar ist, und/oder dass die 3D-Kameravorrichtung von der selbstfahrenden landwirtschaftlichen Arbeitsmaschine unabhängig einsetzbar ist. Mit anderen Worten ausgedrückt, kann die 3D-Kameravorrichtung separat und/oder unabhängig von der selbstfahrenden landwirtschaftlichen Arbeitsmaschine ausgebildet sein.

Bei einer vorteilhaften Weiterbildung der erfindungsgemäßen Lösung ist vorgesehen, dass die 3D-Kameravorrichtung dazu vorgesehen und eingerichtet ist, mittels des dreidimensionalen Modells dreidimensionale Geometriedaten des landwirtschaftlichen Anbaugerätes für den Datensatz der Steuer- und/oder Regeleinrichtung der landwirtschaftlichen Arbeitsmaschine Anbaugerätpunkte des Anbaugerätes festzulegen.

Bei einer vorteilhaften Weiterbildung der erfindungsgemäßen Lösung ist vorgesehen, dass die 3D-Kameravorrichtung dazu vorgesehen und eingerichtet ist, mittels des dreidimensionalen Modells des landwirtschaftlichen Anbaugerätes Koordinaten der Anbaugerätpunkte im dreidimensionalen Raum für den Datensatz der Steuer- und/oder Regeleinrichtung der landwirtschaftlichen Arbeitsmaschine Anbaugerätpunkte des Anbaugerätes festzulegen.

Bei einer vorteilhaften Weiterbildung der erfindungsgemäßen Lösung ist vorgesehen, dass die 3D-Kameravorrichtung dazu vorgesehen und eingerichtet ist, die Anbaugerätpunkte des Anbaugerätes im dreidimensionalen Modell des landwirtschaftlichen Anbaugerätes automatisch festzulegen. Hierfür kann die 3D-Kameravorrichtung ausgebildet und/oder programmiert sein.

Bei einer vorteilhaften Weiterbildung der erfindungsgemäßen Lösung ist vorgesehen, dass die 3D-Kameravorrichtung dazu vorgesehen und eingerichtet ist, dass ein Bediener die Anbaugerätpunkte des Anbaugerätes im dreidimensionalen Modell des landwirtschaftlichen Anbaugerätes festlegt. Hierfür kann die 3D-Kameravorrichtung ein Touchscreen aufweisen.

Ferner betrifft die Erfindung eine selbstfahrende landwirtschaftliche Arbeitsmaschine mit einer Steuer- und/oder Regeleinrichtung und einem landwirtschaftlichen Anbaugerät, wobei die Steuer- und/oder Regeleinrichtung dazu vorgesehen und eingerichtet ist, die landwirtschaftliche Arbeitsmaschine und/oder das Anbaugerät in Abhängigkeit des Datensatzes der erfindungsgemäßen 3D-Kameravorrichtung zu steuern und/oder zu regeln.

Bei einer vorteilhaften Weiterbildung der erfindungsgemäßen Lösung ist vorgesehen, dass die selbstfahrende landwirtschaftliche Arbeitsmaschine dazu vorgesehen und eingerichtet ist, den Datensatz für die Steuer- und/oder Regeleinrichtung von einer Datenbank und/oder von einem QR-Code zu beziehen/zu erfassen. Die Datenbank kann beabstandet von der selbstfahrenden landwirtschaftlichen Arbeitsmaschine angeordnet sein. Die Datenbank kann zur Datenübertragung kabellos mit der Steuer- und/oder Regeleinrichtung der selbstfahrenden landwirtschaftlichen Arbeitsmaschine verbunden sein.

Zusätzlich kann die Erfindung ein datenbankbasiertes Verwaltungssystem umfassen, welches eine Verarbeitungseinrichtung und eine mit dieser zur Übertragung von Daten verbundene Datenbank umfasst, wobei die Datenbank Datensätze der erfindungsgemäßen 3D-Kameravorrichtung für eine erfindungsgemäße selbstfahrende landwirtschaftliche Arbeitsmaschine aufweist. Die Datenbank kann als zentrale Datenbank oder aber als dezentrale, also verteilte, Datenbank ausgebildet sein.

Ferner betrifft die Erfindung einen Traktor mit einer Steuer- und/oder Regeleinrichtung und einem landwirtschaftlichen Anbaugerät, wobei die Steuer- und/oder Regeleinrichtung dazu vorgesehen und eingerichtet ist, die landwirtschaftliche Arbeitsmaschine und/oder das Anbaugerät in Abhängigkeit eines Datensatzes zu steuern und/oder zu regeln, wobei dieser Datensatz basierend auf einem dreidimensionalen Modell des landwirtschaftlichen Anbaugerätes dreidimensionale Geometriedaten des landwirtschaftlichen Anbaugerätes bezüglich Anbaugerätpunkte des Anbaugerätes aufweist. Alle zuvor angeführten und nachfolgenden Kontrastierungen bezüglich des Datensatzes gelten auch für den Datensatz des Traktors.

Ferner betrifft die Erfindung eine als Traktor ausgeführte landwirtschaftliche Arbeitsmaschine mit einer 3D-Kameravorrichtung, einer Steuer- und/oder Regeleinrichtung und einem landwirtschaftlichen Anbaugerät, wobei die 3D-Kameravorrichtung dazu vorgesehen und eingerichtet ist, mittels eines dreidimensionalen Modells dreidimensionale Geometriedaten des landwirtschaftlichen Anbaugerätes für einen Datensatz der Steuer- und/oder Regeleinrichtung der landwirtschaftlichen Arbeitsmaschine Anbaugerätpunkte des Anbaugerätes festzulegen, wobei die Steuer- und/oder Regeleinrichtung dazu vorgesehen und eingerichtet ist, die landwirtschaftliche Arbeitsmaschine und/oder das landwirtschaftliche Anbaugerät in Abhängigkeit des Datensatzes zu steuern und/oder zu regeln.

Weitere wichtige Merkmale und Vorteile der Erfindung ergeben sich aus den Unter-ansprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: den Einsatz einer erfindungsgemäßen 3D-Kameravorrichtung, und
- Fig. 2: eine erfindungsgemäße landwirtschaftliche Arbeitsmaschine.

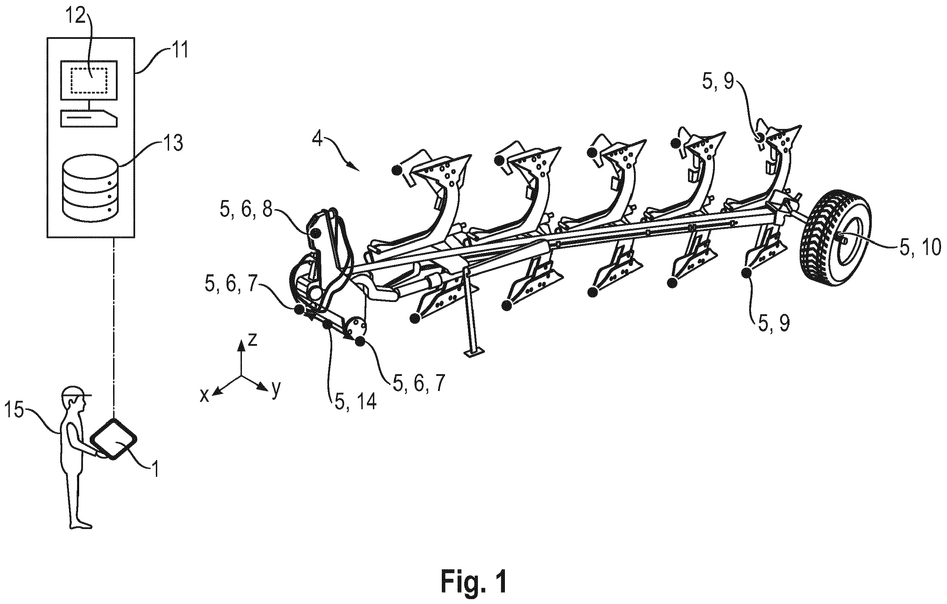

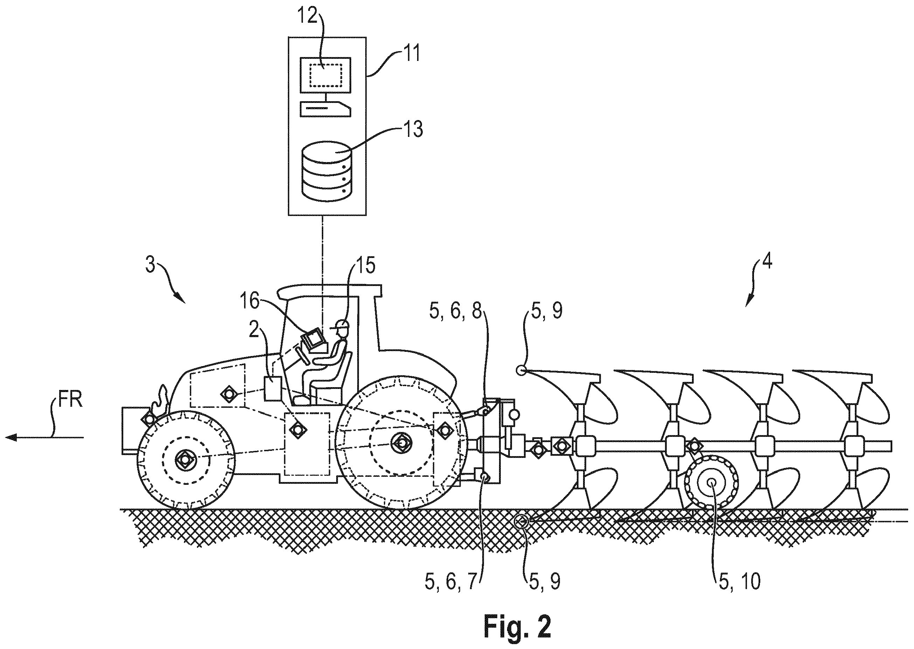

Die Fig. 1 zeigt eine erfindungsgemäße 3D-Kameravorrichtung 1 zur Erzeugung eines Datensatzes für eine Steuer- und/oder Regeleinrichtung 2 einer selbstfahrenden landwirtschaftlichen Arbeitsmaschine 3, die ein landwirtschaftliches Anbaugerät 4 aufweist und in der Fig. 2 dargestellt ist. Die Steuer- und/oder Regeleinrichtung 2 der selbstfahrenden landwirtschaftlichen Arbeitsmaschine 3 kann zur Steuerung und/oder Regelung der selbstfahrenden landwirtschaftlichen Arbeitsmaschine 3 und/oder des landwirtschaftliches Anbaugerätes 4 vorgesehen und eingerichtet sein.

In der Fig. 1 und Fig. 2 ist das landwirtschaftliche Anbaugerät 4 als ein bezüglich der selbstfahrenden landwirtschaftlichen Arbeitsmaschine 3 hinterseitiges Anbaugerät 4 ausbildet. Alternativ oder zusätzlich kann eine solche der selbstfahrenden landwirtschaftlichen Arbeitsmaschine 3 auch ein bezüglich der selbstfahrenden landwirtschaftlichen Arbeitsmaschine 3 frontseitiges Anbaugerät 4 ausbilden.

In der Fig. 2 ist die selbstfahrende landwirtschaftliche Arbeitsmaschine 3 als Zugmaschine in Form eines Traktors ausgebildet, die entlang einer Fahrtrichtung FR über ein landwirtschaftliches Feld fährt und das landwirtschaftliche Anbaugerät 4 zieht, welches in der Fig. 1 und der Fig. 2 als Pflugvorrichtung zur Lockerung und/oder zum Wenden des Ackerbodens des landwirtschaftlichen Feldes ausgebildet ist.

Während die selbstfahrende landwirtschaftliche Arbeitsmaschine 3 mit dem gekoppelten landwirtschaftlichen Anbaugerät 4 in der Fig. 2 angedeutet ist, verwendet ein Bediener 15 in der Fig. 1 die erfindungsgemäße 3D-Kameravorrichtung 1, um das landwirtschaftliche Anbaugerät 4 in einem bezüglich der landwirtschaftlichen Arbeitsmaschine 3 ungekoppelten Zustand zu erfassen.

Die 3D-Kameravorrichtung 1 ist dazu vorgesehen und eingerichtet, ein dreidimensionales Modell des landwirtschaftlichen Anbaugerätes 4 zu generieren und in diesem dreidimensionalen Modell des landwirtschaftlichen Anbaugerätes 4 für den Datensatz der Steuer-und/oder Regeleinrichtung 2 der landwirtschaftlichen Arbeitsmaschine 3 Anbaugerätpunkte 5 des Anbaugerätes 4 festzulegen. Diese Anbaugerätpunkte 5 des Anbaugerätes 4 sind in der Fig. 1 als auch in der Fig. 2 angedeutet.

Wie in der Fig. 1 angedeutet, ist die 3D-Kameravorrichtung 1 außerhalb, unabhängig und von der selbstfahrenden landwirtschaftlichen Arbeitsmaschine 2 beabstandete einsetzbar durch einen Bediener 15 außerhalb der selbstfahrenden landwirtschaftlichen Arbeitsmaschine 2 einsetzbar.

Die 3D-Kameravorrichtung 1 kann mit einem bezüglich der 3D-Kameravorrichtung 1 beabstandeten Verwaltungssystem 11, welches eine Verarbeitungseinrichtung 12 und eine Datenbank 13 aufweist, zur Datenübertragung, insbesondere kabellosen Datenübertragung, verbunden sein. Die 3D-Kameravorrichtung 1 kann dazu vorgesehen und eingerichtet sein, den erzeugten Datensatz, insbesondere das erfasste dreidimensionale Modell des landwirtschaftlichen Anbaugerätes 4, an das Verwaltungssystem 11 zu übermitteln, wobei die Verarbeitungseinrichtung 12 des Verwaltungssystem 11 diesen übermitteln Datensatz in der Datenbank 13 speichert.

Die 3D-Kameravorrichtung 1 und/oder ein bezüglich der 3D-Kameravorrichtung 1 beabstandetes Verwaltungssystem 11 mit einer Verarbeitungseinrichtung 12 kann dazu vorgesehen und eingerichtet sein, in dem dreidimensionalen Modell des landwirtschaftlichen Anbaugerätes 4 die Teilkomponenten des Anbaugerätes 4 mit wenigstens einem Anbaugerätpunkt 5, insbesondere mit genau einem Anbaugerätpunkt 5, für den Datensatz der Steuer-und/oder Regeleinrichtung 2 der landwirtschaftlichen Arbeitsmaschine 3 festzulegen. Ein Anbaugerätpunkt 5 kann eine dreidimensionale Koordinate im dreidimensionalen Raum, insbesondere eine dreidimensionale Koordinate bezüglich des dreidimensionalen Modells des landwirtschaftlichen Anbaugerätes 4, sein.

Wenigstens ein Anbaugerätpunkt 5 kann sich auf einen Kopplungspunkt 6 des landwirtschaftlichen Anbaugerätes 4 zur Kopplung an die selbstfahrende landwirtschaftliche Arbeitsmaschine 3 beziehen. In der Fig. 1 als auch in der Fig. 2 sind mehrere Kopplungspunkte 6 angedeutet, wobei sich zwei Anbaugerätpunkte 5 auf einen unterlenkerseitigen Kopplungspunkt 7 des landwirtschaftlichen Anbaugerätes 4 zur Kopplung an die selbstfahrende landwirtschaftliche Arbeitsmaschine 3 beziehen, während sich ein Anbaugerätpunkt 5 auf einen oberlenkerseitigen Kopplungspunkt 8 des landwirtschaftlichen Anbaugerätes 4 zur Kopplung an die selbstfahrende landwirtschaftliche Arbeitsmaschine 3 bezieht. Wenigstens ein Anbaugerätpunkt 5 kann sich auf einen Werkzeugspitzenpunkt 9 des landwirtschaftlichen Anbaugerätes 4 beziehen. Hierbei können sich mehrere Anbaugerätpunkte 5 auf oberseitige und/oder unterseitige Werkzeugspitzenpunkt 9 beziehen. Wenigstens ein Anbaugerätpunkt 5 kann sich auf einen Stützradpunkt 10 des landwirtschaftlichen Anbaugerätes 4 beziehen.

Die 3D-Kameravorrichtung 1 kann dazu vorgesehen und eingerichtet sein, mittels des dreidimensionalen Modells dreidimensionale Geometriedaten des landwirtschaftlichen Anbaugerätes 4 für den Datensatz der Steuer- und/oder Regeleinrichtung 2 der landwirtschaftlichen Arbeitsmaschine 3 Anbaugerätpunkte 5 des Anbaugerätes 4 festzulegen. Die 3D-Kameravorrichtung 1 kann dazu vorgesehen und eingerichtet sein, in dem dreidimensionalen Modell des landwirtschaftlichen Anbaugerätes 4 einen Koordinatenursprung 14 festzulegen. Die dreidimensionalen Koordinaten im dreidimensionalen Raum können sich auf diesen Koordinatenursprung 14 beziehen. Hierdurch ist es beispielsweise möglich, Beabstandungen und/oder Positionierungen von Teilkomponenten des Anbaugerätes 4 mittels der 3D-Kameravorrichtung zu erfassen. Die 3D-Kameravorrichtung 1 kann dazu vorgesehen und eingerichtet sein, mittels des dreidimensionalen Modells des landwirtschaftlichen Anbaugerätes 4 Koordinaten der Anbaugerätpunkte 5 im dreidimensionalen Raum für den Datensatz der Steuer- und/oder Regeleinrichtung 2 der landwirtschaftlichen Arbeitsmaschine 3 Anbaugerätpunkte 5 des Anbaugerätes 4 festzulegen.

Bei einer vorteilhaften Weiterbildung der erfindungsgemäßen Lösung ist vorgesehen, dass die 3D-Kameravorrichtung 1 dazu vorgesehen und eingerichtet ist, die Anbaugerätpunkte 5 des Anbaugerätes 4 im dreidimensionalen Modell des landwirtschaftlichen Anbaugerätes 4 automatisch festzulegen. Hierfür kann die 3D-Kameravorrichtung 1 ausgebildet und/oder programmiert sein.

Bei einer vorteilhaften Weiterbildung der erfindungsgemäßen Lösung ist vorgesehen, dass die 3D-Kameravorrichtung 1 dazu vorgesehen und eingerichtet ist, dass der Bediener 15 die Anbaugerätpunkte 5 des Anbaugerätes 4 im dreidimensionalen Modell des landwirtschaftlichen Anbaugerätes 4 festlegt. Hierfür kann die 3D-Kameravorrichtung 1 beispielsweise ein Touchscreen aufweisen.

Ferner betrifft die Erfindung eine selbstfahrende landwirtschaftliche Arbeitsmaschine 3 mit der Steuer- und/oder Regeleinrichtung 2 und dem landwirtschaftlichen Anbaugerät 4, wobei die Steuer- und/oder Regeleinrichtung 2 dazu vorgesehen und eingerichtet ist, die landwirtschaftliche Arbeitsmaschine 3 und/oder das Anbaugerät 4 in Abhängigkeit des Datensatzes der erfindungsgemäßen 3D-Kameravorrichtung 1 zu steuern und/oder zu regeln.

Bei einer vorteilhaften Weiterbildung der erfindungsgemäßen Lösung ist vorgesehen, dass die selbstfahrende landwirtschaftliche Arbeitsmaschine 3 dazu vorgesehen und eingerichtet ist, den Datensatz für die Steuer- und/oder Regeleinrichtung 2 von einer nicht dargestellten Datenbank und/oder von einem nicht dargestellten QR-Code zu beziehen bzw. zu erfassen. Diese nicht dargestellte Datenbank kann beispielsweise eine Datenbank der selbstfahrenden landwirtschaftlichen Arbeitsmaschinen 3 sein. Der nicht dargestellte QR-Code kann beispielsweise auf dem landwirtschaftlichen Anbaugerät 4 positioniert und/oder angeordnet sein. Die selbstfahrende landwirtschaftliche Arbeitsmaschine 3 kann eine nicht dargestellte Kameravorrichtung zur Erfassung eines solchen QR-Code und/oder des Anbaugerätes 4 aufweisen.

Die selbstfahrende landwirtschaftliche Arbeitsmaschine 3 kann dazu vorgesehen und eingerichtet sein, den Datensatz für die Steuer- und/oder Regeleinrichtung 2 von der Datenbank 13 des Verwaltungssystems 11, welches beabstandet von der selbstfahrenden landwirtschaftlichen Arbeitsmaschine 3 angeordnet ist, zu beziehen. Die Datenbank 13 des Verwaltungssystems 11 kann der Verarbeitungseinrichtung 12 zur Datenübertragung kabellos mit der Steuer- und/oder Regeleinrichtung 2 der selbstfahrenden landwirtschaftlichen Arbeitsmaschine 3 verbunden sein. Die Datenbank 13 kann Datensätze der 3D-Kameravorrichtung 1 die selbstfahrende landwirtschaftliche Arbeitsmaschine 3 aufweist. Die Datenbank 13 kann als zentrale Datenbank oder aber als dezentrale, also verteilte, Datenbank ausgebildet sein.

Die selbstfahrende landwirtschaftliche Arbeitsmaschine 3 kann ein Fahrerassistenzsystem mit einer Ein- und/oder Ausgabeeinheit 15 aufweisen, wobei diese Ein- und/oder Ausgabeeinheit 15 zur Interaktion mit einem Bediener 15 dient, der sich in der selbstfahrende landwirtschaftliche Arbeitsmaschine 3 befindet. Das Fahrerassistenzsystem kann mit der Steuer- und/oder Regeleinrichtung 2 gekoppelt sein, um den Bediener 15, der sich in der selbstfahrende landwirtschaftliche Arbeitsmaschine 3, Informationen bezüglich der Datensätze der 3D-Kameravorrichtung 1 darzustellen.

### Bezugszeichenliste

- 1: 3D-Kameravorrichtung
- 2: Steuer- und/oder Regeleinrichtung
- 3: Selbstfahrende landwirtschaftliche Arbeitsmaschine
- 4: landwirtschaftliches Anbaugerät
- 5: Anbaugerätepunkte
- 6: Kopplungspunkt
- 7: unterlenkerseitiger Kopplungspunkt
- 8: oberlenkerseitiger Kopplungspunkt
- 9: Werkzeugspitzenpunkt
- 10: Stützradpunkt
- 11: Verwaltungssystem
- 12: Verarbeitungseinrichtung
- 13: Datenbank
- 14: Koordinatenursprung
- 15: Bediener
- 16: Ein- und/oder Ausgabeeinheit

## Patentansprüche

1. 3D-Kameravorrichtung (1) zur Erzeugung eines Datensatzes für eine Steuer-und/oder Regeleinrichtung (2) einer selbstfahrenden landwirtschaftlichen Arbeitsmaschine (3), die ein landwirtschaftliches Anbaugerät (4) aufweist,
**dadurch gekennzeichnet,**
**dass** die 3D-Kameravorrichtung (1) dazu vorgesehen und eingerichtet ist, ein dreidimensionales Modell des landwirtschaftlichen Anbaugerätes (4) zu generieren und in diesem dreidimensionalen Modell des landwirtschaftlichen Anbaugerätes (4) für den Datensatz der Steuer- und/oder Regeleinrichtung (2) der landwirtschaftlichen Arbeitsmaschine (3) Anbaugerätpunkte (5) des Anbaugerätes (4) festzulegen.

2. 3D-Kameravorrichtung (1) nach Anspruch 1,
**dadurch gekennzeichnet,**
**dass** sich wenigstens ein Anbaugerätpunkt (5) auf einen Kopplungspunkt (6) des landwirtschaftlichen Anbaugerätes (4) zur Kopplung an die selbstfahrende landwirtschaftliche Arbeitsmaschine (3) bezieht.

3. 3D-Kameravorrichtung (1) nach einem der vorhergehenden Ansprüche,
**dadurch gekennzeichnet,**
**dass** sich wenigstens ein Anbaugerätpunkt (5) auf einen unterlenkerseitigen Kopplungspunkt (7) des landwirtschaftlichen Anbaugerätes (4) zur Kopplung an die selbstfahrende landwirtschaftliche Arbeitsmaschine (3) bezieht.

4. 3D-Kameravorrichtung (1) nach einem der vorhergehenden Ansprüche,
**dadurch gekennzeichnet,**
**dass** sich wenigstens ein Anbaugerätpunkt (5) auf einen oberlenkerseitigen Kopplungspunkt (8) des landwirtschaftlichen Anbaugerätes (4) zur Kopplung an die selbstfahrende landwirtschaftliche Arbeitsmaschine (3) bezieht.

5. 3D-Kameravorrichtung (1) nach einem der vorhergehenden Ansprüche,
**dadurch gekennzeichnet,**
**dass** sich wenigstens ein Anbaugerätpunkt (5) auf einen Werkzeugspitzenpunkt (9) des landwirtschaftlichen Anbaugerätes (4) bezieht.

6. 3D-Kameravorrichtung (1) nach einem der vorhergehenden Ansprüche,
**dadurch gekennzeichnet,**
**dass** sich wenigstens ein Anbaugerätpunkt (5) auf einen Stützradpunkt (10) und/oder eine Rückverfestigungswalze des landwirtschaftlichen Anbaugerätes (4) bezieht.

7. 3D-Kameravorrichtung (1) nach einem der vorhergehenden Ansprüche,
**dadurch gekennzeichnet,**
- **dass** das landwirtschaftliche Anbaugerät (4) ein bezüglich der selbstfahrenden landwirtschaftlichen Arbeitsmaschine (3) frontseitiges Anbaugerät (4) ausbildet, oder
- **dass** das landwirtschaftliche Anbaugerät (4) ein bezüglich der selbstfahrenden landwirtschaftlichen Arbeitsmaschine (3) hinterseitiges Anbaugerät (4) ausbildet.

8. 3D-Kameravorrichtung (1) nach einem der vorhergehenden Ansprüche,
**dadurch gekennzeichnet,**
- **dass** die 3D-Kameravorrichtung (1) außerhalb der selbstfahrenden landwirtschaftlichen Arbeitsmaschine (2) einsetzbar ist, und/oder
- **dass** die 3D-Kameravorrichtung (1) von der selbstfahrenden landwirtschaftlichen Arbeitsmaschine (2) beabstandet einsetzbar ist, und/oder
- **dass** die 3D-Kameravorrichtung (1) von der selbstfahrenden landwirtschaftlichen Arbeitsmaschine (2) unabhängig einsetzbar ist.

9. 3D-Kameravorrichtung (1) nach einem der vorhergehenden Ansprüche,
**dadurch gekennzeichnet,**
**dass** die 3D-Kameravorrichtung (1) dazu vorgesehen und eingerichtet ist, mittels des dreidimensionalen Modells dreidimensionale Geometriedaten des landwirtschaftlichen Anbaugerätes (4) für den Datensatz der Steuer- und/oder Regeleinrichtung (2) der landwirtschaftlichen Arbeitsmaschine (3) Anbaugerätpunkte (5) des Anbaugerätes (4) festzulegen.

10. 3D-Kameravorrichtung (1) nach einem der vorhergehenden Ansprüche,
**dadurch gekennzeichnet,**
**dass** die 3D-Kameravorrichtung (1) dazu vorgesehen und eingerichtet ist, mittels des dreidimensionalen Modells des landwirtschaftlichen Anbaugerätes (4) Koordinaten der Anbaugerätpunkte (5) im dreidimensionalen Raum für den Datensatz der Steuer-und/oder Regeleinrichtung (2) der landwirtschaftlichen Arbeitsmaschine (3) Anbaugerätpunkte (5) des Anbaugerätes (4) festzulegen.

11. 3D-Kameravorrichtung (1) nach einem der vorhergehenden Ansprüche,
**dadurch gekennzeichnet,**
**dass** die 3D-Kameravorrichtung (1) dazu vorgesehen und eingerichtet ist, die Anbaugerätpunkte (5) des Anbaugerätes (4) im dreidimensionalen Modell des landwirtschaftlichen Anbaugerätes (4) automatisch festzulegen.

12. 3D-Kameravorrichtung (1) nach einem der vorhergehenden Ansprüche,
**dadurch gekennzeichnet,**
**dass** die 3D-Kameravorrichtung (1) dazu vorgesehen und eingerichtet ist, dass ein Bediener (15) die Anbaugerätpunkte (5) des Anbaugerätes (4) im dreidimensionalen Modell des landwirtschaftlichen Anbaugerätes (4) festlegt.

13. Selbstfahrende landwirtschaftliche Arbeitsmaschine (3) mit einer Steuer- und/oder Regeleinrichtung (2) und einem landwirtschaftlichen Anbaugerät (4),
**dadurch gekennzeichnet,**
**dass** die Steuer- und/oder Regeleinrichtung (2) dazu vorgesehen und eingerichtet ist, die landwirtschaftliche Arbeitsmaschine (3) und/oder das Anbaugerät (4) in Abhängigkeit des Datensatzes der 3D-Kameravorrichtung (1) nach einem der vorhergehenden Ansprüche zu steuern und/oder zu regeln.

14. Selbstfahrende landwirtschaftliche Arbeitsmaschine (3) nach Anspruch 13,
**dadurch gekennzeichnet,**
**dass** die selbstfahrende landwirtschaftliche Arbeitsmaschine (3) dazu vorgesehen und eingerichtet ist, den Datensatz für die Steuer- und/oder Regeleinrichtung (2) von einer Datenbank (13) und/oder von einem QR-Code zu beziehen.

15. Als Traktor (3) ausgeführte landwirtschaftliche Arbeitsmaschine (3) mit einer 3D-Kameravorrichtung (1), einer Steuer- und/oder Regeleinrichtung (2) und einem landwirtschaftlichen Anbaugerät (4),
**dadurch gekennzeichnet,**
**dass** die 3D-Kameravorrichtung (1) dazu vorgesehen und eingerichtet ist, mittels eines dreidimensionalen Modells dreidimensionale Geometriedaten des landwirtschaftlichen Anbaugerätes (4) für einen Datensatz der Steuer- und/oder Regeleinrichtung (2) der landwirtschaftlichen Arbeitsmaschine (3) Anbaugerätpunkte (5) des Anbaugerätes (4) festzulegen, wobei die Steuer- und/oder Regeleinrichtung (2) dazu vorgesehen und eingerichtet ist, die landwirtschaftliche Arbeitsmaschine (3) und/oder das landwirtschaftliche Anbaugerät (4) in Abhängigkeit des Datensatzes zu steuern und/oder zu regeln.
